# EUROPEAN PATENT APPLICATION

(11) **EP 0 978 428 A2**
(43) Date of publication of application: **09.02.2000**
(21) Application number: 99303627.6
(22) Date of filing: 10.05.1999
(51) Int. Cl.: B60R 25/00, B62H 5/14

(54) **Anti-theft system**

(30) Priority: 08.05.1998 GB 9809921; 10.12.1998 GB 9827258
(71) Applicant: Safety Locks Ltd, London W8 4SG (GB)
(72) Inventor: Fry, Jay, London W8 7SS (GB)
(74) Representative: Silverman, Warren

(57) **Abstract**

The invention provides an anti-theft system for a vehicle having ignition circuitry. The system comprises a lock for physically immobilising the vehicle, at least a part of which is displaceable between two positions. In the first position, the ignition circuitry is operative, and in the second position the lock is in place physically to immobilise the vehicle and the ignition circuitry is inoperative. This means that the lock must be in the first position, i.e. not immobilising the vehicle, before the ignition circuitry is operative, providing dual levels of security and ensuring that the vehicle cannot be driven or ridden with the lock in place.

## Description

The present invention relates to an anti-theft system.

In the following, the present invention will be described in detail with reference to its use with motorcycles. However, it is to be understood that the invention can be used with any vehicle which has an engine or motor the operation of which is controlled by ignition circuitry. Moreover, in certain aspects, the invention is not limited to use with such vehicles and can be applied to any security system capable of using a linked multiplicity of locking systems to enhance security and resistance to theft.

In its most general sense, the present invention also relates to the provision of additional security in buildings and in particular to security in the door of a private property, a prison cell or a hotel room, for example. It also relates to the provision of security with locks used to lock a window.

Motorcycle security devices are well-known. One type of motorcycle security device is the disc-lock which comprises a metal element so shaped as to be capable of being opened to capture the brake disc or main drive sprocket of the motorcycle. The disc-lock has a key-operated means for securely closing and locking it in place, thereby physically preventing rotation of the wheel system and immobilising the vehicle.

A problem with locks of this type is that it is possible for the rider of the motorcycle to forget that the lock is in place. If the rider then attempts to ride the motorcycle, extensive and expensive damage is caused to the part of the motorcycle to which the lock is attached. If the rider tries to avoid this problem by not applying the lock (or indeed simply forgets to apply the lock), the motorcycle is more susceptible to apply the lock), the motorcycle is more susceptible to theft.

According to a first aspect of the present invention there is provided an anti-theft system, comprising:
a first lock and a second lock, both of which are operable by the same key,
wherein the second lock can only be locked after the first lock has been locked, and the first lock can only be unlocked after the second lock has been unlocked.

According to a second aspect of the present invention, there is provided a system as claimed in claim 2, 3 or 4, wherein the switch is the ignition switch of the vehicle.

Accordingly, the at least a part of the lock must be displaced from the second position (in which the vehicle is physically immobilised and the ignition circuitry is inoperative or disabled) to the first position (in which the vehicle is not physically immobilised and the ignition circuitry is operative) before the motor or engine of the vehicle can be operated. This prevents the vehicle from being moved with the lock in place, and the damage that would occur if this happened. It also means that the engine or motor of the vehicle cannot be operated unless the at least a part of the lock is in the first position.

It is currently envisaged that this aspect of the present invention will find most application on vehicles which have an engine, such as motorcycles. However, the anti-theft system of the invention could equally be used on vehicles having a motor, such as an electric motor.

In one embodiment, the at least a part of the lock itself physically forms a part of the ignition circuitry in the first position by clipping or otherwise being received in an appropriate receptacle in or on the vehicle. Thus, when in the receptacle, the vehicle can be operated. However, when the lock is displaced from the receptacle in order to be put in place to immobilise physically the vehicle, the ignition circuitry is interrupted and the motor or engine of the vehicle cannot be operated.

However, the system preferably further comprises a switch having a first switch position in which the ignition circuitry is operative and a second switch position in which the ignition circuitry is inoperative wherein said at least a part of the lock causes the switch to be in the first switch position when in its first position and in the second switch position when in its second position.

The said at least a part of the lock is preferably a removable lock barrel assembly, the first position thereof being located in a chamber in or on the vehicle which includes the switch, and the second position thereof being located in the lock.

The lock barrel assembly may have (a) means for preventing rotation of the assembly within the lock and the chamber, and (b) means for actuating a member of the lock thereby to lock/unlock the lock and for actuating the switch thereby to move the switch between the first and second switch positions.

In one embodiment, the switch is separate from the ignition switch of the vehicle.

In an alternative embodiment, the switch is the ignition switch of the vehicle. In this embodiment, the lock must be in the first position, i.e. not physically immobilising the vehicle, before the ignition switch and hence the starter system and/or steering of the vehicle can be operated.

In this alternative embodiment, the lock barrel assembly may be constructed and arranged such that the key can only be removed therefrom after the lock barrel assembly has switched off the ignition and locked the lock. Accordingly, in order to retrieve the key, the driver or rider of the vehicle must switch off the ignition switch to prevent the engine or motor of the vehicle from being started and then use the key and lock barrel assembly to lock the lock. When it is desired to drive or ride the vehicle, the ignition cannot be switched on because the lock barrel assembly is associated with the lock; therefore the engine or motor cannot be started and the vehicle cannot be used when the lock is locked. In order to start the motor or engine and use the vehicle, the driver or rider must first unlock the lock and then use the key and lock barrel assembly to switch on the ignition. Preferably, the key can only be removed from the lock barrel assembly after it has been rotated within the assembly through a predetermined rotation, the ignition being switched off by a rotation of less than the predetermined rotation and the lock being locked by a rotation substantially equal to the predetermined rotation.

Preferably, the lock is for blocking movement of at least a part of the final drive and/or the wheels of the vehicle. More preferably, the lock is for attachment to a brake disc or drive sprocket or wheel of the vehicle, although it could be integral or otherwise associated with the vehicle.

According to a third aspect of the invention, there is provided a disc lock or sprocket lock operable by a removable lock barrel assembly.

According to a fourth aspect of the invention, there is provided a vehicle ignition lock operable by a removable lock barrel assembly.

Reverting to the anti-theft system of the first aspect of this invention, the system of this aspect of the present invention provides additional security because the same key is used to operate the first and second locks, which may be, in use, located in the door of a private property, a prison cell or a hotel room, for example. Alternatively, the locks could be used to lock a window.

It is possible that the requirement that the second lock can only be locked after the first lock has been locked, and that the first lock can only be unlocked after the second lock has been unlocked, is achieved by providing a key which is altered after the second lock is locked so that the first lock cannot then be unlocked. Unlocking of the second lock reverses the alteration so that the first lock can be unlocked. The key may be altered physically or electronically, for example by the use of magnetic fields.

However, the first and second locks are preferably each operated by a single removable lock barrel assembly operable by the key.

The lock barrel assembly may be constructed and arranged such that the key can only be removed therefrom after the lock barrel assembly has locked the first lock and the second lock. Accordingly, in order to retrieve the key, the first lock must first be locked, and the key and lock barrel assembly then used to lock the second lock.

Preferably, the key can only be removed from the lock barrel assembly after it has been rotated within the assembly through a predetermined rotation, the first lock being locked by a rotation of less than the predetermined rotation and the second lock being locked by a rotation substantially equal to the predetermined rotation.

The lock barrel assembly may be receivable in each of the first and second locks, and have (a) means for preventing rotation of the assembly within the first and second locks and (b) means for actuating a member of each of the first and second locks thereby to lock/unlock the respective lock.

For a better understanding of the invention, and to show how the same may be carried into effect, reference will now be made, by way of example, to the accompanying drawings, in which:-
Figure 1 is a schematic front view of a U-lock of a first anti-theft system in accordance with the present invention;
Figure 2 is a schematic end view of the U-lock of Figure 1;
Figure 3 is a partial schematic vertical section through the rotary capture mechanism and the U-shaped element of the U-lock of Figure 1;
Figure 4 is a partial schematic horizontal section through the rotary capture mechanism and the U-shaped element of the U-lock of Figure 1;
Figure 5 is a schematic side view of a lock barrel of the first anti-theft system in accordance with the present invention;
Figure 6 is a schematic plan view of the lock barrel of Figure 5;
Figure 7 is a schematic end view of the lock barrel of Figure 5; and
Figure 8 is a partial schematic vertical section through an ignition switch of the first anti-theft system in accordance with the present invention, with a lock barrel in place in the ignition switch.
Figure 9 is a schematic plan view of a lock body of a lock of a second anti-theft system in accordance with the present invention;
Figure 10 is a schematic plan view of a lock body chassis for being received in the lock body of Figure 9;
Figure 11 is a schematic side view of a lock barrel of the second anti-theft system in accordance with the present invention;
Figure 12 is a section along the line 12-12' in Figure 10;
Figure 13 is a schematic plan view of a lock bolt for being received in the lock chassis of Figure 10;
Figure 14 is a schematic end view of a lock barrel chamber of the second anti-theft system in accordance with the present invention; and
Figure 15 is a section along the line 15-15' in Figure 14.

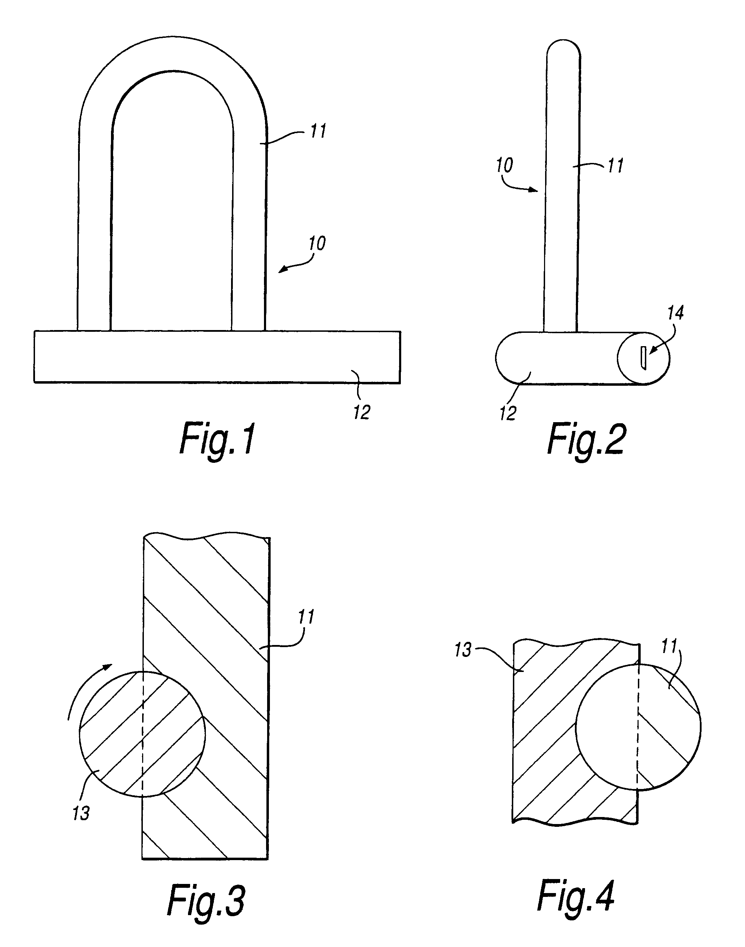

Referring to Figure 1 of the drawings, a first anti-theft system in accordance with the present invention comprises a U-lock 10, which has a formed U-shaped element 11 and a lock body 12. Element 11 is shaped to pass through apertures in the disc brake system or drive sprocket of a motorcycle or like vehicle, or other apertures in the wheel or drive system, so that, when secured, it prevents wheel rotation.

In known manner, lock body 12 is arranged to receive the two free ends of the U shaped element 11, and has a rotary capture mechanism 13 (see Figs. 3 & 4), operated by a key-operated lock barrel 14, which captures and securely locks the free ends into position in the lock body 12.

Both the U-shaped element 11 and the exterior casing of the lock body 12 are constructed of hardened ferrous alloy metal. They are also so constructed as to contain devices which severely hinder mechanical and thermal attempts to disrupt them by cutting, sawing, drilling, grinding, etc, and which limit the effectiveness of impact or other attack methods such as bending, straining, etc.

Referring to Figures 3 and 4, as is known in conventional U-locks, the U-shaped element 11 has a cutaway portion which receives a corresponding portion of the rotary capture mechanism 13 when that mechanism is rotated by 180° using the key-operated lock barrel 14, thereby locking the U-shaped element 11 within the lock body 12.

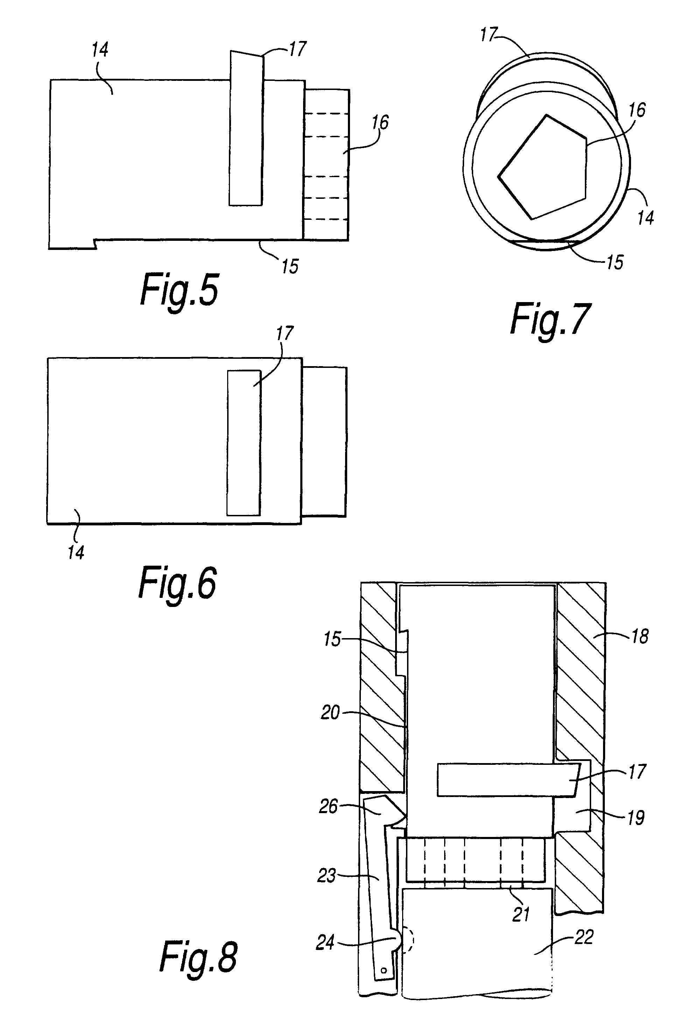

Referring to Figures 5, 6 and 7, lock barrel 14 is constructed and arranged to be able to be removed from lock body 12 when the U-shaped element 11 is unlocked from lock body 12, and to be inserted into the lock body 12 to cause the rotary capture mechanism 13 to lock the U-shaped element 11 in place.

Thus, lock barrel 14 has means for preventing it from rotating within the lock body 12 when it is inserted in the lock body 12 which comprises an anti-rotation flat 15 extending part way along one side thereof which engages a corresponding flat (not shown) in the lock body 12.

At the end of the lock barrel 14 distal the end into which the key is inserted (i.e. the end which is inserted into the lock body 12), there is an asymmetrically-shaped female drive 16 which engages a corresponding male drive (not shown) on the end of the rotary capture mechanism 13.

The lock barrel 14 also has a cam mechanism which causes a cam follower portion 17 to move outwardly of the lock barrel 14 when the key is rotated within the lock barrel 14. Thus, when the key is operated to lock the U-lock 10, it rotates the rotary capture mechanism 13 via female drive 16 to secure the U-shaped element 11 into the lock body 12, and simultaneously operates the cam mechanism to move cam follower portion 17 which retains and secures the lock barrel 14 in the lock body 12.

When the lock barrel 14 is in position in the U-lock 10 and the U-lock 10 is locked by rotating the key 180°, then and only then, can the key be removed. This locking operation requires a key rotation of 180° which operates both the barrel lock cam mechanism and the rotary capture mechanism 13.

The lock barrel 14 is protected from direct frontal attack by drilling, etc. by having a hardened cap over the exterior key end and, when inserted into the lock body 12, is flush faced with the end of the lock body 12. Thus, when the lock barrel 14 is in its operational position, it can only be physically attacked at this hardened face end. The barrel lock key/operational system is preferably a proprietary type which has a very high number of differs and is also fitted with "anti-lockpicking" devices.

Referring now to Figure 8, removable lock barrel 14 also forms an integral mechanical part of the vehicle ignition system. The ignition switch housing 18 is constructed to accept the lock barrel 14 in the same manner as the lock body 12. Thus, the housing 18 has a recess 19 into which the cam follower portion 17 is received, and an anti-rotation flat portion 20 for engaging the flat 15 of the lock barrel 14.

The female drive 16 of the lock barrel 14 engages a corresponding male drive 21 at the end of a spigot 22 which drives the normal operative devices of a known mechanical and electrical ignition switch mechanism, including steering locking, etc.

The ignition switch housing 18 also has one or more spring-loaded catches 23, each of which is biased so that, when the lock barrel is not located therein, a protrusion 24 thereof engages in a recess 25 in the side of the spigot 22 and prevents the spigot from being rotated. When the lock barrel 14 is inserted into the housing 18, it engages a sloping flange 26 of the catch 23 which causes the or each catch 23 to be pivoted outwardly, thereby removing protrusion 24 from the recess 25 and allowing the spigot 22 to be rotated. This mechanism, together with the asymmetric male parts of the ignition switch housing 18 and the rotary capture device 13 engaging with the female part 16 of the lock barrel 14, deter tampering with the spigot 22 and the rotary capture device 13 when the lock barrel 14 is not in place.

Normal operation of known mechanical and electrical ignition switch systems requires a key rotation of less than 180°. Thus, since the lock barrel system is so constructed to allow key withdrawal only after 180° rotation is completed, the key can never be taken away from the ignition switch housing 18 without the lock barrel 14.

It will thus be appreciated that, when the vehicle is parked, the ignition is switched off by rotating the key less than 180°. This causes the lock barrel 14 to be freed from ignition switch housing 18. In order to retrieve the key from the lock barrel 14, the driver of the vehicle must insert the lock barrel 14 in the lock body 12 and lock the U-lock 10.

When the driver of the vehicle comes to drive the vehicle away, the removable lock barrel 14 must be inserted into the ignition switch housing 18 and used to operate the release of the steering lock, to engage the "electrics" and thus start the vehicle. However, as there is only one lock barrel 14, this must first be removed from the lock body 12, thus unlocking the U-lock 10.

This prevents attempts to drive the vehicle with the U-lock 10 in position. It also provides a fail safe system for the driver in the event that he/she forgets that the U-lock 10 is in position and thus prevents serious consequential accidental damage being caused to the areas of the vehicle where the U-lock 10 is in position.

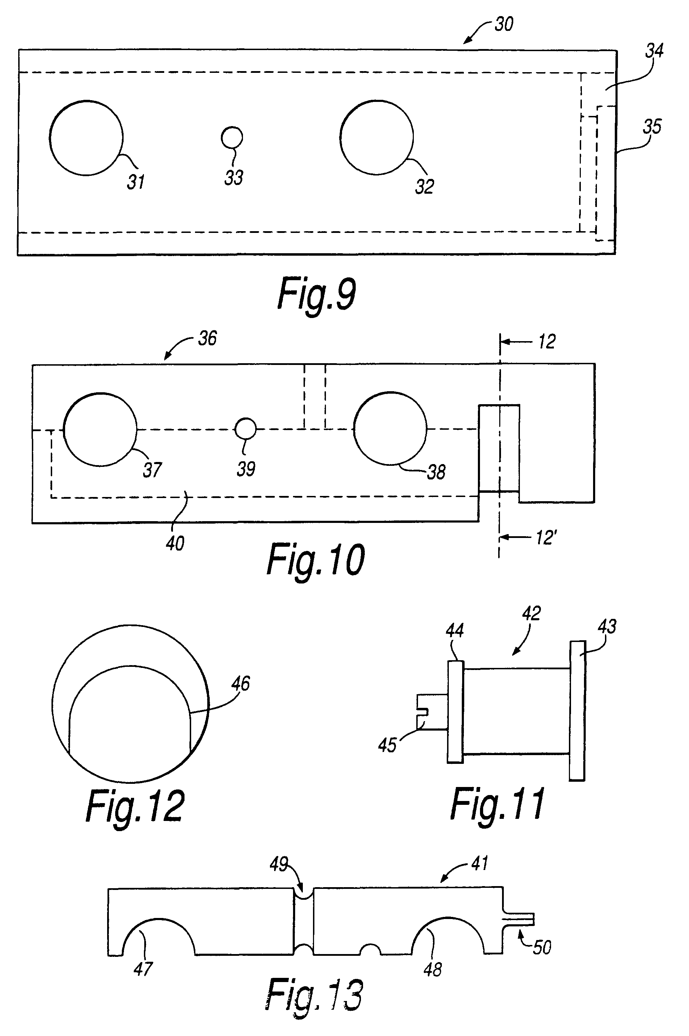

A second embodiment in accordance with the present invention is illustrated in Figs. 9 to 15. The features of this second embodiment are generally the same as the first embodiment, except as described below.

Referring to Fig. 9, the U-lock has a lock body 30 which is a hollow cylinder of hardened metal having apertures 31, 32 and 33 in the outer wall thereof. The apertures 31 and 32 are for receiving the respective arms of a U-shaped element similar to that shown in Fig. 1. The function of aperture 33 will be described below. One end of the lock body 30 is closed by a plate 34 having an off-centre aperture 35 therein.

Lock body 30 receives therein a lock body chassis 36 (Fig. 10) which includes apertures 37, 38 and 39 corresponding to apertures 31, 32 and 33. Lock body chassis 36 is inserted in lock body 30 such that the respective apertures are aligned; apertures 33 and 39 receive a pin therein to ensure that chassis 36 does not rotate within lock body 30.

Chassis 36 further includes a bore 40; along most of its length, this bore has a relatively small diameter and is for receiving a rotary bolt 41 (see Fig. 13). However, at the end of the chassis 36 adjacent to the plate 34, the bore 40 has an enlarged diameter and is for receiving a lock barrel 42 (see Fig. 11) similar to lock barrel 14.

Lock barrel 42 has a freely rotatable disc 43 at the end which receives the key and anti-rotation flats 44 at the other end thereof. A female drive portion 45 in the form of a groove is connected to the lock mechanism so that rotation of the key causes rotation of the female drive portion 45 relative to the housing of the lock barrel 42.

Referring now to Fig. 12, lock body chassis 36 has a portion 46 which engages the anti-rotation flats 44 of the lock barrel 42 when the key is turned in the lock barrel. Thus, when the lock barrel is inserted into bore 40, turning of the key causes the barrel 42 to rotate such that anti-rotation flats 44 engage with the chassis 36 and prevent further rotation of the lock barrel within the chassis, and also removal of the lock barrel from the chassis.

Referring now to Fig. 13, the rotary bolt 41 is arranged to rotate within bore 40 of chassis 36. In known manner, bolt 41 has cut away portions 47, 48 which, when appropriately aligned with apertures 31, 32, 37, 38 allow the ends of the U-lock to be inserted in the lock body. The ends of the U-lock can then be captured by rotation of the bolt 41. In addition, lock bolt 41 has an annular groove 49 which prevents the pin which is inserted in apertures 33 and 39 from preventing the bolt 41 from rotating freely within the bore 40. Furthermore, one end of the lock bolt has an outwardly-extending male drive portion 50, corresponding to female drive portion 45 of the lock barrel 42.

In use, this second embodiment operates in a manner similar to the first embodiment.

When it is desired to apply the lock to a drive sprocket or brake disc, etc, the U-shaped element is inserted into apertures 31, 32, 37, 39 which are appropriately aligned. The lock barrel 42 is inserted into the lock body 30, such that the female drive portion 45 at the end of the lock barrel 42 engages with male drive portion 50. Rotation of the key causes the barrel 42 to rotate within bore 40 such that anti-rotation flats 44 engage with the chassis 36 and prevent further rotation thereof. Rotation of the key causes female drive portion 45 to rotate bolt 41 within the chassis 36 and capture the U-shaped portion of the lock therein.

When the lock is to be unlocked, the sequence of events is reversed, the key being rotated in the lock barrel to cause the bolt 41 to release the U-shaped portion of the lock, and the anti-rotation flats 44 to disengage with the chassis 36 so that the lock barrel 42 can be withdrawn from the lock body 30.

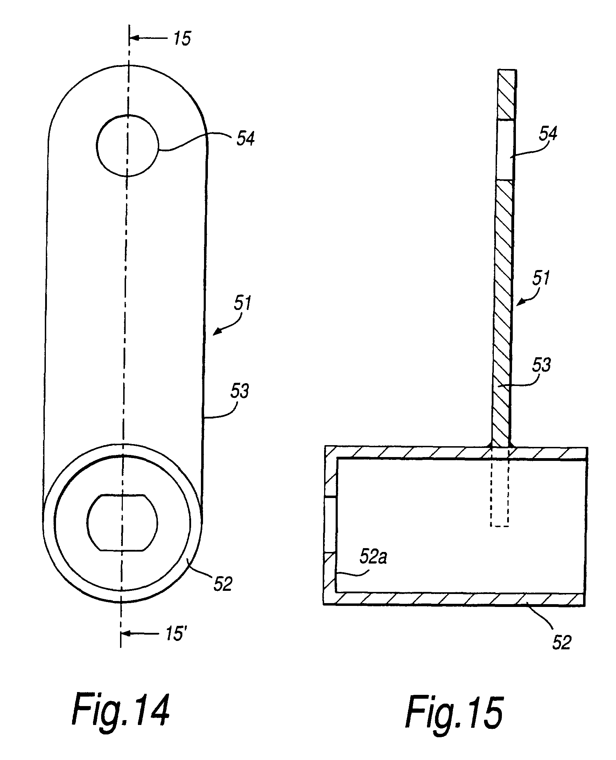

Referring now to Figs. 14 and 15, the anti-theft system of the second embodiment further includes a switch body 51. This body 51 includes a chamber 52 for receiving and storing the lock barrel 42 therein when the lock barrel is not in the lock body 30. Chamber 52 is connected to a bracket 53 which is secured to an appropriate part of the vehicle. When the anti-theft system is fitted to a motorcycle, the bracket 53 can be secured to the exhaust bracket of the motorcycle by means of the hole 54 therein.

The lock barrel 42 is received within chamber 52 such that the female drive portion 45 at the end thereof engages with a switch (not shown) at the end 52a of the chamber. Rotation of the key causes the lock barrel 42 to rotate until it is restrained by the action of the anti-rotation flats 44, and the female drive portion 45 rotates to actuate the switch.

The switch within the chamber 52 operates to isolate or disable the ignition circuitry of the vehicle. For example, the switch can be within the circuit between the battery and the ignition of the vehicle. Alternatively, it may operate in a similar manner to a known "kill" switch. It is preferred that for security reasons the switch has a number of dummy wires extending therefrom so as to reduce the likelihood of the correct wires being cut from the switch and then correctly connected, thereby bypassing the switch.

When the lock barrel 42 has been rotated sufficiently to operate the switch, the key can be removed therefrom, leaving the lock barrel in place in the chamber 52.

Thus, during the normal operation of the motorcycle, the lock barrel 42 is located within chamber 52 such that the switch therein allows the ignition circuitry to operate.

When the rider of the motorcycle desires to place the U-lock on the wheel or brake disc or sprocket of the motorcycle, the key must be inserted into the lock barrel 42 and rotated so that the lock barrel can be removed from the chamber 52 for use in the U-lock. This, of course, causes the switch to isolate the ignition circuitry. The lock barrel 42 can then be inserted into the lock body 30 to operate the U-lock in the manner described above.

Thus, with the U-lock in place, the engine of the motorcycle cannot be started. This prevents the owner of the motorcycle from starting it and driving away with the lock in place on the wheel, etc. Furthermore, it provides a dual level of security: the U-lock physically immobilising the vehicle and the ignition circuitry being inoperable (owing to the switch) when the U-lock is in place.

In a preferred embodiment, the female drive 45 at the end of the lock barrel is replaced by a key, and the male drive 50 at the end of the switch and the rotary bolt 41 are replaced by respective corresponding locks. This provides additional security.

## Claims

1. An anti-theft system, comprising:
a first lock and a second lock, both of which are operable by the same key,
wherein the second lock can only be locked after the first lock has been locked, and the first lock can only be unlocked after the second lock has been unlocked.

2. A system as claimed in claim 1, wherein the first and second locks are each operable by a single removable lock barrel assembly operable by the key.

3. A system as claimed in claim 2, wherein the lock barrel assembly is constructed and arranged such that the key can only be removed therefrom after the lock barrel assembly has locked the first lock and the second lock.

4. A system as claimed in claim 2 or claim 3, wherein the key can only be removed from the lock barrel assembly after it has been rotated within the assembly through a predetermined rotation, the first lock being locked by a rotation of less than the predetermined rotation and the second lock being locked by a rotation substantially equal to the predetermined rotation.

5. A system as claimed in claim 2, 3 or 4, wherein the lock barrel assembly is receivable in each of the first and second locks, and has (a) means for preventing rotation of the assembly within the first and second locks and (b) means for actuating a member of each of the first and second locks thereby to lock/unlock the respective lock.

6. An anti-theft system for a vehicle having ignition circuitry, comprising:
a lock for physically immobilising the vehicle, at least a part of the lock being displaceable between a first position in which the ignition circuitry is operative and a second position in which the lock is in place physically to immobilise the vehicle and the ignition circuitry is inoperative.

7. A system as claimed in claim 6, further comprising a switch having a first switch position in which the ignition circuitry is operative and a second switch position in which the ignition circuitry is inoperative, wherein said at least a part of the lock causes the switch to be in the first switch position when in its first position and in the second switch position when in its second position.

8. A system as claimed in claim 7, wherein said at least a part of the lock is a removable lock barrel assembly, the first position thereof being located in a chamber in or on the vehicle which includes the switch, and the second position thereof being located in the lock.

9. A system as claimed in claim 8, wherein the lock barrel assembly has (a) means for preventing rotation of the assembly within the lock and the chamber, respectively, and (b) means for actuating a member of the lock thereby to lock/unlock the lock and for actuating the switch thereby to move the switch between the first and second switch positions.

10. A system as claimed in claim 7, 8 or 9, wherein the switch is separate from the ignition switch of the vehicle.

11. A system as claimed in claim 7, 8 or 9, wherein the switch is the ignition switch of the vehicle.

12. A system as claimed in any preceding claim, wherein the lock is for blocking movement of at least a part of the final drive and/or the wheels of the vehicle.

13. A system as claimed in claim 12, wherein the lock is for attachment to a brake disc or drive sprocket or wheel of the vehicle.

14. A disc lock or sprocket lock operable by a removable lock barrel assembly.

15. A vehicle ignition lock operable by a removable lock barrel assembly.
